# FASCICULE DE BREVET EUROPEEN

(11) **EP 0 712 778 B1**
(45) Date de publication et mention de la délivrance du brevet: **21.04.1999**
(21) Numéro de dépôt: 94402599.8
(22) Date de dépôt: 16.11.1994
(51) Int. Cl.: B62K 19/16, B62K 19/18

(54) **Cadre de cycle modulable et caractéristiques anti-vibratoires d'un tel cadre**
Modularfahrradrahmen mit Vibrationsdämpfer
Modular bicycle frame with anti-vibration characteristics

(43) Date de publication de la demande: 22.05.1996
(73) Titulaire: BIRD SA, F-73370 Le Bourget du Lac (FR)
(72) Inventeur: Legerot, Gérard, F-93160 Noisy le Grand (FR)
(74) Mandataire: Gasquet, Denis

(56) Documents cités:
- EP-A- 0 125 735
- EP-A- 0 587 927
- FR-A- 2 354 916
- FR-A- 2 458 445
- FR-A- 2 705 078
- US-A- 5 059 057

## Description

La présente invention concerne un cadre de cycle modulable.

Les cadres de fabrications actuelles sont principalement réalisés à l'aide de profilés métalliques soudées, brasés, ou collés. Certains sont réalisés par collage d'éléments en matériaux composites carbone ou carbone-kevlar. D'autres sont réalisés par moulage de matériaux tels que les alliages légers dural ou magnésium, ou par moulage sous pression de matériaux thermoplastiques renforcés en fibres de verre ou de carbone.

La fabrication de cadres de cycles suivant ces procédés présente certains inconvénients.

En ce qui concerne les cadres en acier ou en alliage légers assemblés par mécanosoudage, les déformations engendrées par des zones de surchauffe imposent des passages au marbre afin de les redresser, ceci rendant le respect des tolérances géométriques très aléatoire. Les temps de production sont excessivement longs et donc onéreux.

D'autre part, le manque d'élasticité de ces matériaux expose les cadres à des déformations rémanentes en cas de chocs.

Ces matériaux sensibles à la corrosion nécessitent des protections par laquage de peinture précédés de prétraitement rendant les opérations de décorations délicates et onéreuses.

Des cadres réalisés par moulage d'alliages légers à base d'aluminium ou de magnésium nécessitent après fabrication de longues opérations d'ébavurage et d'usinage.

Les matériaux thermoplastiques renforcés verre ou carbone envisagés jusqu'à présent offrent des modules de flexion ne dépassant pas 15000 Mpa. Pour obtenir dans ces conditions une bonne rigidité en flexion et en torsion, il faudrait alors surdimensionner les épaisseurs des profilés constituant les cadres, au détriment du poids et du prix.

En ce qui concerne les cadres constitués de matériaux composites carbone ou carbone-kevlar, outre le coût très élevé des matériaux, les temps de mise en oeuvre sont très longs entraînAnt des coûts de revient prohibitifs.

La proximité de pièces métalliques dans l'environnement de ces matériaux a tendance à produire un effet catalytique nuisible à des assemblageS qui nécessitent de bons contacts.

Ces matériaux de couleur naturelle sombre limitent les procédés de décoration tels que la sublimation.

D'autre part, une rigidité excessive associée à une très bonne propagation des ondes de vibrations rendent les cadres de cycle très peu confortables.

Le document EP-A-587 927 decrît un cadre de cycle constitue de profilés pultrudés bouchonnés à leurs extrémités et de boitiers de liaison formant ainsi une carcasse, sur ladite carcasse étant fixée une triangulation de fixation de roue arrière composée de bases et de haubans, les boitiers de liaison liant les profilés etant moulés dans un matériau thermoplastique à matrice partiellement aromatique

Le cadre de cycle selon l'invention devrait permettre de simplifier considérablement le procédé de fabrication et d'assemblage, et donc de réduire de façon signifiante les coûts de revient. L'utilisation de matériaux thermoplastiques à matrice partiellement aromatique permet d'avoir des modules de flexion supérieurs à 20000 Mpa et additionnés de certains adjuvants permettent d'obtenir un très bon compromis rigidité, confort, anti-corrosion galvanique, et facilement décorables.

Pour atteindre ces buts, l'invention fournit un cadre de cycle modulable selon la revendication 1.

La structure de tel matériau est comparable à la structure de certain polyamide 66, la différence étant qu'un polyamide 66 comporte une matrice interchaine moléculaire d'acide adipique, alors qu'un polyamide aromatique comporte une matrice interchaine moléculaire d'acide isophthalique, ces matrices étant greffées sur des chaînes moléculaires du genre hexaméthylenediamine.

De tels matériaux à matrice partiellement aromatique présentent des modules de flexion supérieurs à 20000 Mpa et des résistances à la rupture en traction supérieures à 250 kg/mm2. Ces données, associées à des moments d'inertie de section judicieusement choisis, permettent de concurrencer en rigidité les profilés acier ou alliages légers.

D'autre part, les caractéristiques élastiques intrinsèques de tels matériaux évitent les risques de déformation rémanente en cas de chocs.

L'insertion de charges d'élastomères permet de faire écran à la propagation des ondes de vibration.

L'insertion de charges isotropiques minérale permet d'optimiser le moment de torsion.

L'insertion d'agents anti-oxygène permet de désactiver tout effet catalytique dans les environnements de pièces métalliques.

L'insertion d'agents antistatiques permet de réaliser les décorations à l'abri de toute pollution poussiéreuse.

L'assemblage et les liaisons des profilés avec les boîtiers est assuré par le retrait thermique du thermoplastique à matrice partiellement aromatique après moulage, lors du refroidissement.

Les moules de boîtiers de tige de selle et de boîtiers de pédaliers sont munis de pavés interchangeables (Z) permettant différents types de fixation de la triangulation de roue arrière : fixation par surmoulage, par boulonnage ou par l'intermédiaire d'une suspension verticale.

Les dessins annexés illustrent l'invention.

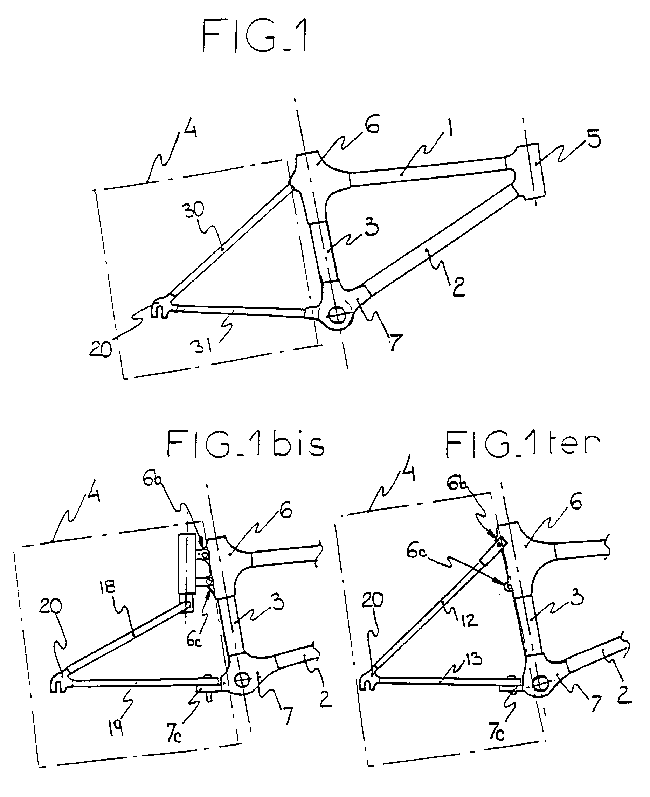

La figure 1 représente le cadre selon l'invention équipé d'un arrière rigide surmoulé.
La figure 1bis représente le cadre selon l'invention équipé d'un arrière à suspension verticale.
La figure 1ter représente le cadre selon l'invention équipé d'un arrière rigide surmoulé.
La figure 2a représente une section possible pour les profilés.
La figure 2b représente une section possible d'un profilé coextrudé.
La figure 2c représente une section de profilé muni d'une nervure verticale.
La figure 2d représente une section de profilé muni d'une nervure horizontale.

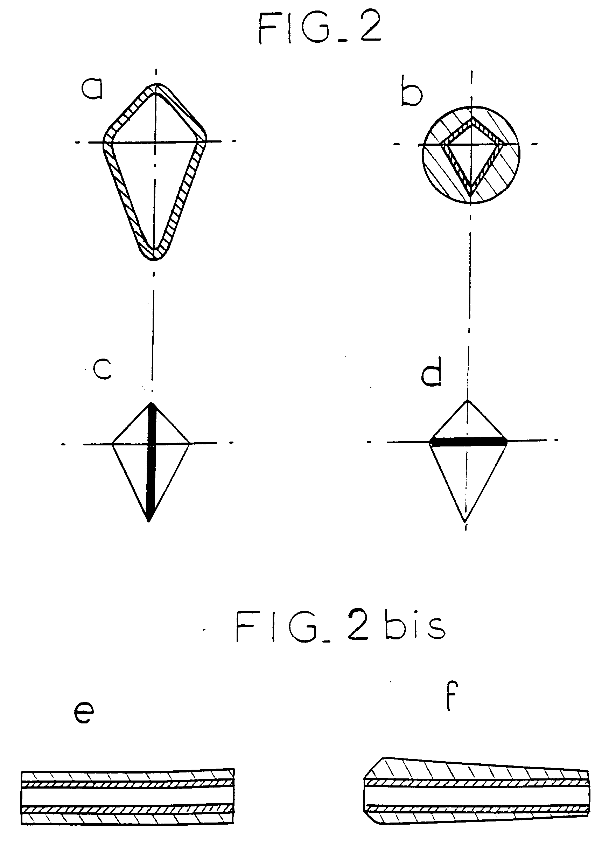

La figure 2bis-e représente une section dans la longueur d'un profilé coextrudé.
La figure 2bis-f représente une section dans la longueur d'un profilé surmoulé.

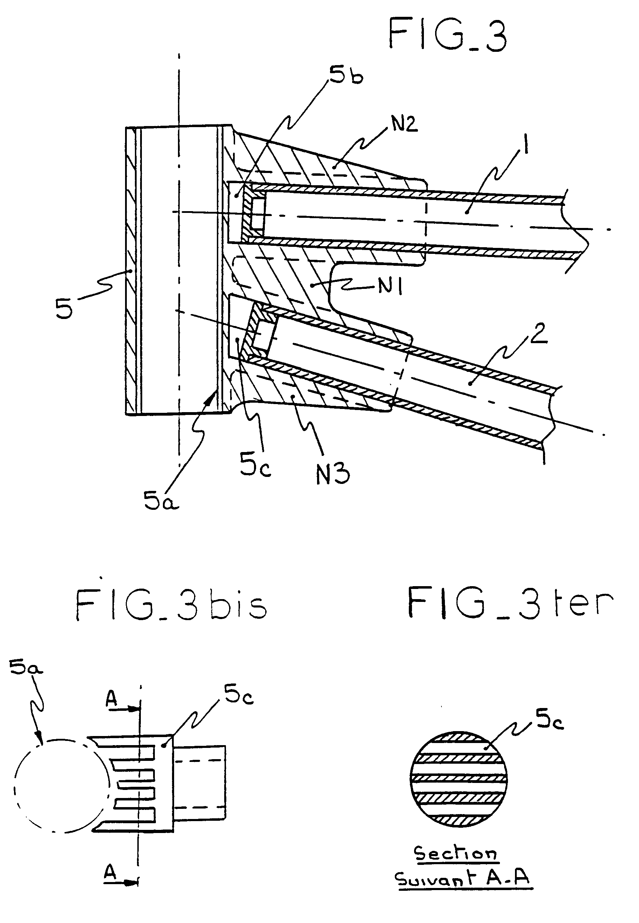

La figure 3 représente le boîtier de direction.
La figure 3bis représente un bouchon muni de ses ailettes.
La figure 3ter représente en coupe les ailettes d'un bouchon.

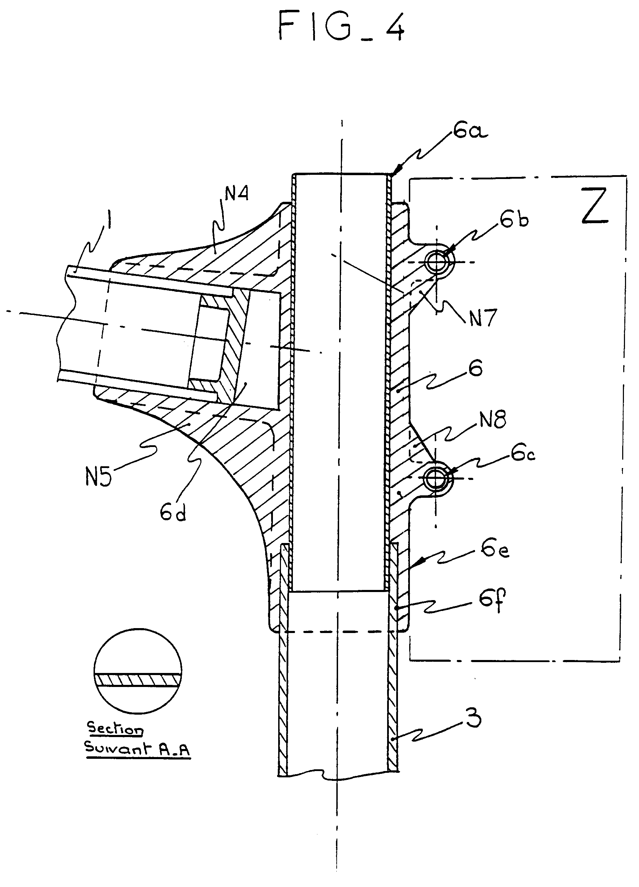

La figure 4 représente le boîtier de tige de selle muni de deux bossages.

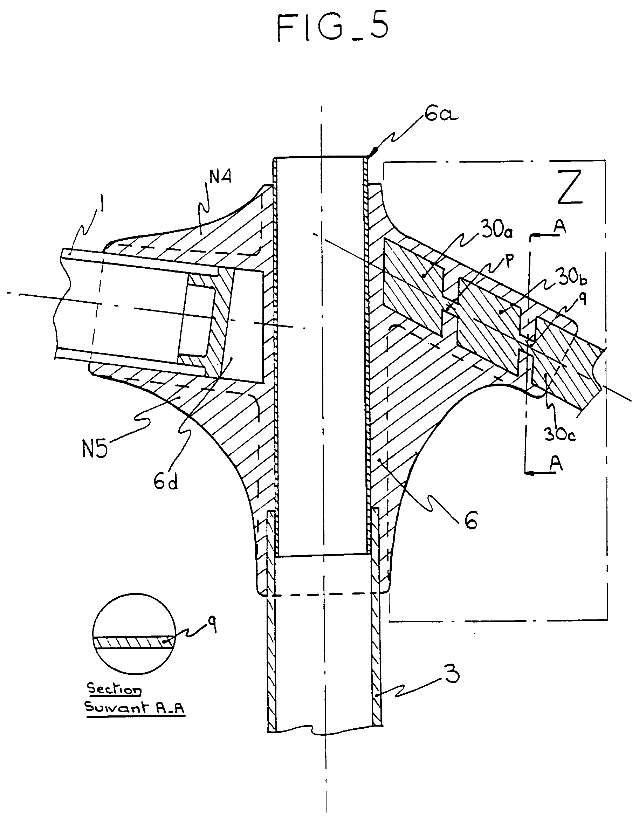

La figure 5 représente le boîtier de tige de selle muni d'un arrière surmoulé.

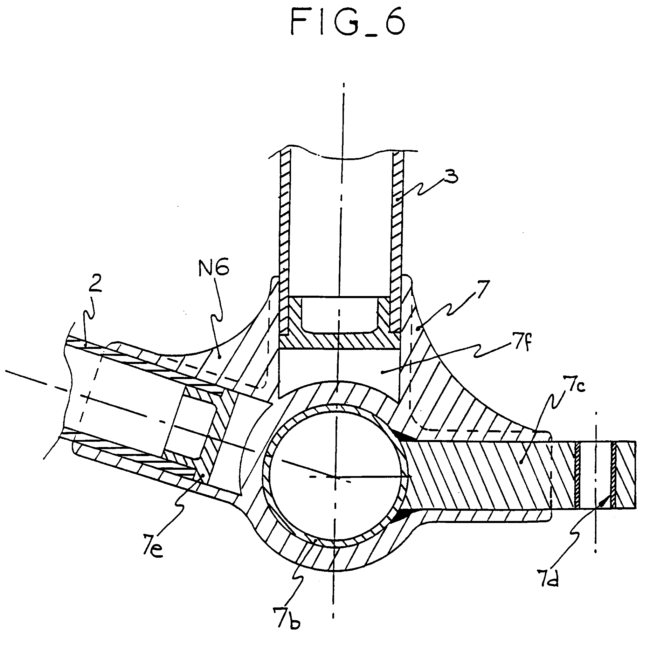

La figure 6 représente le boîtier de pédalier muni d'une chape.

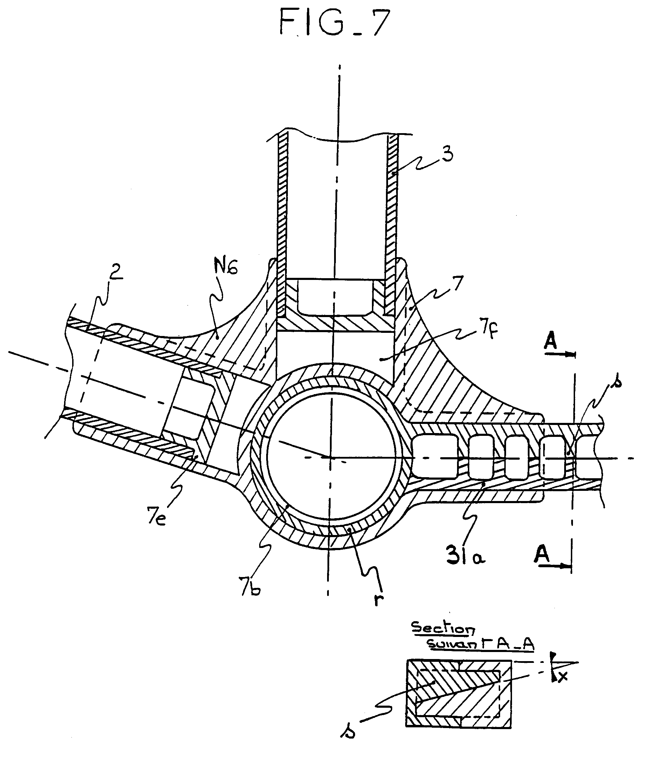

La figure 7 représente le boîtier de pédalier muni d'un arrière surmoulé.

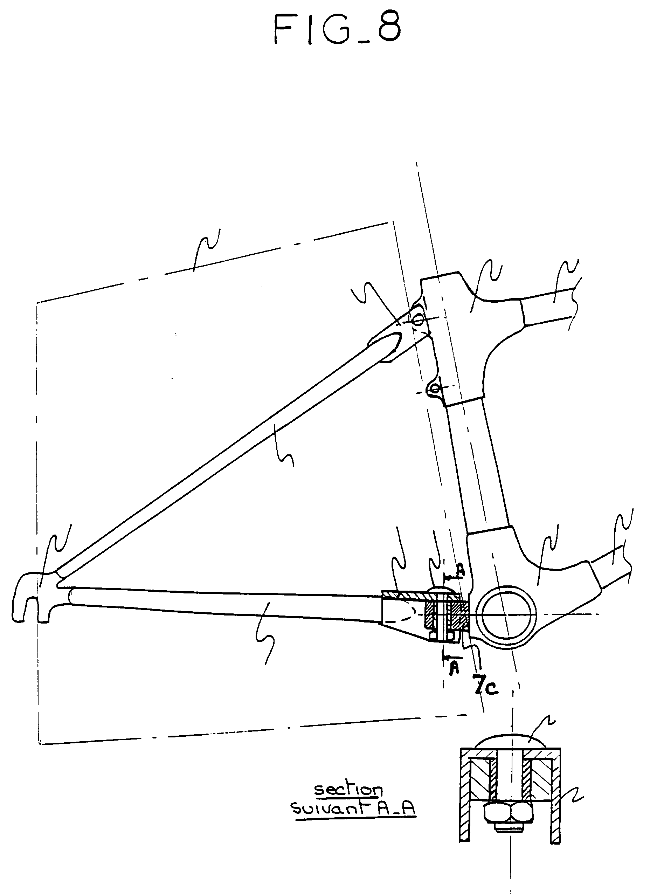

La figure 8 représente une triangulation rigide boulonnée sur la carcasse.

En référence à ces dessins, le cadre selon l'invention est constitué d'une carcasse composée de trois profilés pultrudés 1, 2, 3, un profilé supérieur 1, un profilé inférieur 2, et un profilé vertical 3.

Les profilés 1, 2 et 3 sont fabriqués soit en continu par pultrusion ou en continu par coextrusion d'un revêtement thermoplastique à matrice partiellement aromatique sur un profilé pultrudé.

La pultrusion permet de fabriquer par étirage en continu des profilés de formes diverses à partir de matériaux composites thermodurcissables renforcés de fibres de verre ou de carbone.

La section possible des profilés, 1, 2, 3 peut être circulaire ou avoir la forme d'un quadrilatère isocèle (figure 2a) ou les deux dans le cas d'une coextrusion (figure 2b).

Une nervure intérieure verticale (figure 2c) ou horizontale (figure 2d) peut être ajoutée de façon à augmenter la résistance en torsion.

La carcasse selon l'invention est également constituée de trois boîtiers de liaison ; un boîtier de direction 5, un boîtier de tige de selle 6, et un boîtier de pédalier 7.

Les boîtiers 5, 6 et 7 sont moulés dans un matériau thermoplastique à matrice partiellement aromatique.

Le cadre selon l'invention comporte une triangulation de fixation de roue arrière 4, constituée de deux haubans et de deux bases :
. haubans 12 et bases 13 dans le cas d'un arrière boulonné sur la carcasse (figure 1ter),
. haubans 19 et bases 19 dans le cas d'un arrière à suspension verticale (figure 1bis),
. haubans 30 et base 31 dans le cas d'un arrière surmoulé (figure 1).

Suivant des modes particuliers de réalisation, lesdits haubans et lesdites bases peuvent être réalisés :
. par coextrusion d'un revêtement thermoplastique à matrice partiellement aromatique sur un profilé en résine thermodurcissable (figure 2bis e).
. par surmoulage d'un revêtement thermoplastique à matrice partiellement aromatique d'épaisseur comprise entre 0,5 et 12 mm sur un profilé en résine thermodurcissable (figure 2bis f).

Les matériaux thermoplastiques à matrice partiellement aromatique entrant dans la composition des profilés, des boîtiers de liaison, des haubans et des bases sont choisis parmi ceux dont le module de flexion est supérieur à 17000 Mpa et la résistance à la rupture en traction supérieure à 240 kg/mm2.

Les matériaux thermoplastiques à matrice partiellement aromatique entrant dans la composition des profilés, des boîtiers de liaison, des haubans et des bases comportent :
. un pourcentage en volume compris entre 0,1 et 10 % d'élastomère,
. un pourcentage en volume compris entre 0,1 et 30 % d'une charge minérale isotropique tel que le silicate de baryum.
. un agent anti-oxygène tel que phénol, mercaptan, phosphite ou hydroxy-ethyl-alkylamine.
. un agent anti-statique tel que ammoniums quaternaires, esters de polyols ou phosphates organiques.

En référence aux figures 3, 4, 5 et 6, avant surmoulage les profilés 1, 2 et 3 sont obstrués par des bouchons 5b, 5c, 6d, 7f et 7e. La particularité de ces bouchons suivant l'invention consiste en ce que ces bouchons sont munis d'ailettes parallèles comme le montrent les figures 3bis et 3ter.

Le but de ces ailettes est 1e suivant : lors du moulage des boîtiers de liaison, le matériau en fusion remplit les espaces entre ailettes de façon homogène, évitant ainsi d'avoir des masses de matière plastique trop importantes entre les extrémités des profilés et des tubes 5a, 6a et 7b. Des masses trop importantes inégalement réparties provoqueraient des retraits internes dans la masse et des accumulations de contraintes internes engendrant systématiquement des déformations nuisibles à la géométrie du cadre.

En référence à la figure 3, le boîtier de direction 5 comporte un tube vertical 5a pour le passage du pivot de fourche et trois nervures de renfort N1, N2 et N3 positionnées verticalement et dont l'objet est de renforcer les zones de surmoulage des profilés 1 et 2.

Le moule de boîtier de tige de selle possède un pavé interchangeable Z dont l'objet est l'obtention de deux versions :
. Version 1 : en référence à la figure 4, le boîtier de tige de selle comporte un tube de logement de la tige de selle 6a, deux bossages 6b, 6c situés sur le même axe vertical, lesdits bossages munis chacun d'une entretoise traversante, et de nervures de renfort N7 et N8.
. Version 2 : en référence à la figure 5, le boîtier de tige de selle comporte un tube de logement de la tige de selle 6a. Dans cette version, les haubans 30 sont surmoulés dans le pavé interchangeable Z. Lesdits haubans comportent à leur extrémité trois zones 30a, 30b et 30c de section demicylindrique et de rayon compris entre 4 et 15 mm liées entre elles par deux nervures p et q d'épaisseur comprise entre 1 et 10 mm.

Dans le moule de pédalier, il est possible d'obtenir deux versions :
. Version 1 : en référence à la figure 6, le boîtier de pédalier comporte un tube logement d'axe de pédalier 7b sur lequel est soudée une chape rectangulaire 7c, ladite chape étant munie d'un canon de guidage tubulaire 7d.

Version 2 : en référence à la figure 7, le boîtier de pédalier comporte un tube logement d'axe de pédalier 7b. Dans cette version, les bases 31 sont surmoulés dans le boîtier de pédalier. Lesdites bases comportent à leur extrémité 31a un anneau r de diamètre compris entre 30 et 70 mm et de largeur comprise entre 1 et 70 mm.

La zone de liaison 31a entre l'anneau r et les bases 31 comporte des nervures intérieures s dont au moins une arête forme un angle x avec une des surfaces extérieures de la zone 31a. Un choix judicieux de la position de l'angle x permet d'assembler deux bases ensemble par simple retournement.

Les bases 31 sont centrées sur les tubes 7b par l'intermédiaire des anneaux r.

## Revendications

1. Cadre de cycle modulable constitué de profilés pultrudés (1), (2), (3) bouchonnés à leurs extrémités et de boîtiers de liaison (5), (6), (7) formant ainsi une carcasse, sur ladite carcasse étant fixée une triangulation de fixation de roue arrière (4) composée de bases (13, 19, 31) et de haubans (12, 18, 30), les boîtiers de liaison (5), (6), (7), liant les profilés, les bases et les haubans, etant moulés dans un matériau thermoplastique à matrice partiellement aromatique,
caractérisé en ce que les bases (13) (19) (31) et les haubans (12) (18) (30) sont constitués de profilés en résine thermodurcissable revetus d'un revêtement thermoplastique à matrice partiellement aromatique.

2. Cadre de cycle selon la revendication 1, caractérisé en ce que les bases (13) (19) (31) et les haubans (12) (18) (30) sont réalisés par coextrusion d'un revêtement thermoplastique à matrice partiellement aromatique.

3. Cadre de cycle selon la revendication 1, caractérisé en ce que les bases (13) (19) (31) et les haubans (12) (18) (30) réalisés par surmoulage du revêtement thermoplastique à matrice partiellement aromatique dont l'épaisseur varie entre 0,5 mm et 12 mm.

4. Cadre de cycle selon la revendication 1, caractérisé en ce que les profilés pultrudés (1) (2) et (3) comportent un revêtement coextrudé d'un matériau thermoplastique à matrice partiellement aromatique.

5. Cadre de cycle selon les revendications 1, 2, 3 et 4, caractérisé en ce que les matériaux thermoplastiques à matrice partiellement aromatique des profilés (1) (2) (3), des boîtiers de liaison (5) (6) (7), des haubans (12) (18) (30) et des bases (13) (19) (31) comportent un pourcentage en volume d'élastomère compris entre 0,1 et 10 % 3

6. Cadre de cycle selon les revendications 1, 2, 3 et 4, caractérisé en ce que les matériaux thermoplastiques à matrice partiellement aromatique des profilés (1) (2) (3), des boîtiers de liaison (5) (6) (7), des haubans (12) (18) (30) et des bases (13) (19) (31) comportent un pourcentage en volume comprise entre 0,1 et, 30 % d'une charge minérale isotropique tel que le silicate de baryum.

7. Cadre de cycle selon les revendications 1, 2, 3 et 4 caractérisé en ce que les matériaux thermoplastiques à matrice partiellement aromatique des profilés (1) (2) (3), des boîtiers de liaison (5) (6) (7), des haubans (12) (18) (30) et des bases (13) (19) (31) comportent un agent antioxygène tel que phénol, mercaptan, phosphite ou hydroxyéthyl-alkylamine.

8. Cadre de cycle selon les revendications 1, 2, 3, et 4, caractérisé en ce que les matériaux thermoplastiques à matrice partiellement aromatique des profilés (1) (2) (3), des boîtiers de liaison (5) (6) (7), des haubans (12) (18) (30) et des bases (13) (19) (31) comportent un agent antistatique tel que des ammoniums quaternaires, esters de polyols ou phosphates organiques.

9. Cadre de cycle selon la revendication 1, caractérisé en ce que les bouchons (5b), (5c), (6d) et (7e) obstruant les profiles (1) (2) (3) comportent des ailettes parallèles.

10. Cadre de cycle selon la revendication 1, caractérisé en ce que les profilés (1) (2) et (3) comportent une nervure intérieure horizontale.

11. Cadre de cycle selon la revendication 1, caractérisé en ce que les profilés (1) (2) et (3) comportent une nervure intérieure verticale.

12. Cadre de cycle selon la revendication 1, caractérisé en ce que le boîtier de liaison (6) comporte deux bossages (6b) et (6c) disposés sur le même axe vertical.

13. Cadre de cycle selon les revendications 1 et 12, caractérisé en ce que les deux bossages (6b) et (6c) sont munis chacun d'une entretoise traversante.

14. Cadre de cycle selon la revendication 1, caractérisé en ce que le boitier de liaison (7) comporte une chape rectangulaire (7c) munie d'un canon de guidage tubulaire (7d).

15. Cadre de cycle selon les revendications 1 et 4, caractérisé en ce que les sections des profilés (1) (2) et (3) sont des quadrilatères isocèles.

16. Cadre de cycle selon la revendication 1, caractérisé en ce que les haubans (30) comportent à une extrémité trois zones (30a), (30b), (30c) de section demicylindrique et de rayon compris entre 4 et 15 mm liées entre elles par deux nervures (p) et (q) d'épaisseur comprise entre 1 et 10 mm.

17. Cadre de cycle selon la revendication 1, caractérisé en ce que les bases (31) comportent à une extrémité (31a) un anneau (r) de diamètre compris entre 30 et 70 mm et de largeur comprise entre 1 et 70 mm.

18. Cadre de cycle selon les revendications 1 et 17, caractérisé en ce que la zone de liaison (31a) entre l'anneau (r) et les bases (31) comporte des nervures intérieurs (s) dont au moins une arête forme un angle (x) avec une des surfaces extérieures de la zone (31a).

## Claims

1. Modular cycle frame consisting of pultruded profiled sections (1), (2), (3) plugged at their ends and connecting boxes (5), (6), (7) thus forming a body, there being fixed to the said body a rear-wheel fixing triangulation (4) composed of based (13, 19, 31) and braces (12, 18, 30), the connecting boxes (5), (6), (7) connecting the profiled sections, bases and braces being moulded from a thermoplastic material with a partially aromatic matrix,
characterised in that the bases (13), (19), (31) and the braces (12), (18), (30) consist of profiled sections made of thermosetting resin coated with a thermoplastic coating with a partially aromatic matrix.

2. Cycle frame according to Claim 1, characterised in that the bases (13), (19), (31) and the braces (12), (18), (30) are produced by coextrusion of a thermoplastic coating with a partially aromatic matrix.

3. Cycle frame according to Claim 1, characterised in that the bases (13), (19), (31) and the braces (12), (18), (30) are produced by moulding on the thermoplastic coating with a partially aromatic matrix, whose thickness varies between 0.5 mm and 12 mm.

4. Cycle frame according to Claim 1, characterised in that the pultruded profiled sections (1), (2) and (3) have a coextruded coating of a thermoplastic material with a partially aromatic matrix.

5. Cycle frame according to Claims 1, 2, 3 and 4, characterised in that the thermoplastic materials with a partially aromatic matrix of the profiled sections (1), (2), (3), the connecting boxes (4), (6), (7), the braces (12), (18), (30) and the bases (13), (19), (31) have a percentage of elastomer by volume of between 0.1 and 10%.

6. Cycle frame according to Claims 1, 2, 3, characterised in that the thermoplastic materials with a partially aromatic matrix of the profiled sections (1), (2), (3), the connecting boxes (5), (6), (7), the braces (12), (18), (30) and the bases (13), (19), (31) have a percentage by volume of between 0.1 and 30% of an isotropic mineral filler such as barium silicate.

7. Cycle frame according to Claims 1, 2, 3 and 4, characterised in that the thermoplastic materials with a partially aromatic matrix of the profiled sections (1), (2), (3), the connecting boxes (5), (6), (7), the braces (12), (18), (30) and the bases (13), (19), (31), include an antioxidant such as phenol, mercaptan, phosphite or hydroxyethyl alkylamine.

8. Cycle frame according to claims 1, 2, 3 and 5, characterised in that the thermoplastic materials with a partially aromatic matrix of the profiled sections (1), (2), (3), the connecting boxes (5), (6), (7), the braces (12), (18), (30) and the bases (13), (19), (31), include an antistatic agent such as quaternary ammoniums, polyol esters or organic phosphates.

9. Cycle frame according to Claim 1, characterised in that the plugs (5b), (5c), (6d) and (7e) closing off the profiled sections (1), (2), (3) have parallel fins.

10. Cycle frame according to Claim 1, characterised in that the profiled sections (1), (2) and (3) have a horizontal internal rib.

11. Cycle frame according to Claim 1, characterised in that the profiled sections (1), (2) and (3) have a vertical internal rib.

12. Cycle frame according to Claim 1, characterised in that the connecting box (6) has two protrusions (6b) and (6c) disposed on the same vertical axis.

13. Cycle frame according to Claims 1 and 12, characterised in that the two protrusions (6b) and (6c) are each provided with a stay passing through them.

14. Cycle frame according to Claim 1, characterised in that the connecting box (7) has a rectangular link (7c) provided with a tubular guide barrel (7d).

15. Cycle frame according to Claims 1 and 9, characterised in that the cross sections of the profiled sections (1), (2) and (3) are isosceles quadrilaterals.

16. Cycle frame according to Claim 1, characterised in that the braces (30) have, at one end, three areas (30a), (30b), (30c) with a semicylindrical cross section and a radius of between 4 and 15 mm connected together by two ribs (p) and (q) with a thickness of between 1 and 10 mm.

17. Cycle frame according to Claim 1, characterised in that the bases (31) have at one end (31a) a ring (r) with a diameter of between 30 and 70 mm and a width of between 1 and 70 mm.

18. Cycle frame according to Claims 1 and 17, characterised in that the connecting area (31a) between the ring (r) and the bases (31) has internal ribs (s), at least one edge of which forms an angle (x) with one of the external surfaces of the area (31a).

## Patentansprüche

1. Modularer Fahrradrahmen, der aus an ihren Enden mit Zapfen versehenen, gezogenen Profilen (1, 2, 3) und Verbindungsgehäusen (5, 6, 7) besteht, die somit einen Rahmen bilden, wobei ein Befestigungsdreieck für das Hinterrad (4) an diesem Rahmen befestigt ist, bestehend aus Basisteilen (13, 19, 31) und Verspannungsgliedern (12, 18, 30), wobei die Verbindungsgehäuse (5, 6, 7), welche die Profile, die Basisteile und die Verspannungsglieder verbinden, aus einem thermoplastischen Werkstoff aus teilweise aromatischer Substanz in einer Preßform hergestellt sind,
**dadurch gekennzeichnet, daß**
die Basisteile (13, 19, 31) und die Verspannungsglieder (12, 18, 30) der Profile aus wärmehärtbarem Kunstharz gebildet sind, das mit einer thermoplastischen Ummantelung aus teilweise aromatischer Substanz in einer Preßform beschichtet wurde.

2. Fahrradrahmen nach Anspruch 1, dadurch gekennzeichnet, daß die Basisteile (13, 19, 31) und die Verspannungsglieder (12, 18, 30) durch Koextrusion einer in einer Preßform verarbeiteten thermoplastischen Ummantelung aus teilweise aromatischer Substanz realisiert werden.

3. Fahrradrahmen nach Anspruch 1, dadurch gekennzeichnet, daß die Basisteile (13, 19, 31) und die Verspannungsglieder (12, 18, 30) durch Abformen einer in einer Preßform erstellten thermoplastischen Ummantelung aus teilweise aromatischer Substanz realisiert werden, deren Dicke zwischen 0,5 und 12 mm variiert.

4. Fahrradrahmen nach Anspruch 1, dadurch gekennzeichnet, daß die gezogenen Profile (1, 2 und 3) eine Ummantelung umfassen, die aus einem in einer Preßform verarbeiteten thermoplastischen Werkstoff aus teilweise aromatischer Substanz koextrudiert ist.

5. Fahrradrahmen nach den Ansprüchen 1, 2, 3 und 4, dadurch gekennzeichnet, daß die in einer Preßform verarbeiteten thermoplastischen Werkstoffe aus teilweise aromatischer Substanz der Profile (1, 2, 3), Verbindungsgehäuse (5, 6, 7), Verspannungsglieder (12, 18, 30) und Basisteile (13, 19, 31) einen Volumenanteil Elastomere enthalten, der zwischen 0,1 und 10% beträgt.

6. Fahrradrahmen nach den Ansprüchen 1, 2, 3 und 4, dadurch gekennzeichnet, daß die in einer Preßform verarbeiteten thermoplastischen Werkstoffe aus teilweise aromatischer Substanz der Profile (1, 2, 3), Verbindungsgehäuse (5, 6, 7), Verspannungsglieder (12, 18, 30) und Basisteile (13, 19, 31) einen Volumenanteil zwischen 0,1 und 30% an mineralischem, isotropem Füllstoff wie Bariumsilikat aufweist.

7. Fahrradrahmen nach den Ansprüchen 1, 2, 3 und 4, dadurch gekennzeichnet, daß die in einer Preßform verarbeiteten thermoplastischen Werkstoffe aus teilweise aromatischer Substanz der Profile (1, 2, 3), Verbindungsgehäuse (5, 6, 7), Verspannungsglieder (12, 18, 30) und Basisteile (13, 19, 31) ein Antioxidationsmittel wie Phenol, Mercaptan, Phosphit oder Hydroxyethylalkylamin enthalten.

8. Fahrradrahmen nach den Ansprüchen 1, 2, 3 und 4, dadurch gekennzeichnet, daß die in einer Preßform verarbeiteten thermoplastischen Werkstoffe aus teilweise aromatischer Substanz der Profile (1, 2, 3), Verbindungsgehäuse (5, 6, 7), Verspannungsglieder (12, 18, 30) und Basisteile (13, 19, 31) ein antistatisches Mittel wie quarternäre Ammoniumverbindungen, Ester von Polyolen oder organische Phosphate enthalten.

9. Fahrradrahmen nach Anspruch 1, dadurch gekennzeichnet, daß die Stopfen (5b, 5c, 6d und 7a), welche die Profile (1, 2, 3) verschließen, parallele Stege enthalten.

10. Fahrradrahmen nach Anspruch 1, dadurch gekennzeichnet, daß die Profile (1, 2 und 3) eine innere, waagerechte Verstärkungsrippe enthalten.

11. Fahrradrahmen nach Anspruch 1, dadurch gekennzeichnet, daß die Profile (1, 2 und 3) eine innere, senkrechte Verstärkungsrippe enthalten.

12. Fahrradrahmen nach Anspruch 1, dadurch gekennzeichnet, daß das Verbindungsgehäuse (6) zwei Augen (6a) und (6b) enthält, die auf der gleichen vertikalen Achse angeordnet sind.

13. Fahrradrahmen nach den Ansprüchen 1 und 12, dadurch gekennzeichnet, daß die zwei Augen (6b) und (6c) jeweils mit einer durchgehenden Zwischenhülse versehen sind.

14. Fahrradrahmen nach Anspruch 1, dadurch gekennzeichnet, daß das Verbindungsgehäuse (7) eine rechteckige Abdeckung (7c) enthält, die mit einer rohrförmigen Führungshülse (7d) versehen ist.

15. Fahrradrahmen nach den Ansprüchen 1 und 4, dadurch gekennzeichnet, daß die Querschnitte der Profile (1, 2 und 3) gleichschenklige Vierecke sind.

16. Fahrradrahmen nach Anspruch 1, dadurch gekennzeichnet, daß die Verspannungsglieder (30) an einem Ende drei Bereiche (30a, 30b, (30c) mit halbzylindrischem Querschnitt und einem Radius enthalten, der zwischen 4 und 15 mm aufweist, die miteinander durch zwei Verstärkungsrippen (p) und (q) verbunden sind, die eine Dicke zwischen 1 und 10 mm aufweisen.

17. Fahrradnahmen nach Anspruch 1, dadurch gekennzeichnet, daß die Basisteile (31) an einem Ende (31a) einen Ring mit einem Durchmesser zwischen 30 und 70 mm und eine Breite zwischen 1 und 70 mm aufweist.

18. Fahrradrahmen nach den Ansprüchen 1 und 17, dadurch gekennzeichnet, daß der Verbindungsbereich (31a) zwischen dem Ring (r) und den Basisteilen (31) innere Verstärkungsrippen (s) aufweist, deren zumindest eine Kante mit einer der äußeren Flächen des Bereiches (31a) einen Winkel (x) bildet.
